# EUROPEAN PATENT APPLICATION

(11) **EP 1 923 614 A2**
(43) Date of publication of application: **21.05.2008**
(21) Application number: 07120750.0
(22) Date of filing: 15.11.2007
(51) Int. Cl.: F16L 11/12, A01G 9/24

(54) **Suspension system for tubular film**

(30) Priority: 16.11.2006 NL 2000317
(71) Applicant: Priva Holding B.V., 2678 LC De Lier (NL)
(72) Inventor: Jamoneau, Serge Remi, 2675 CE, Honselersdijk (NL)
(74) Representative: van Westenbrugge, Andries

(57) **Abstract**

Film tube (5) for the circulating therethrough of air for optimising the climate in a cultivation space. This film tube (5) can be suspended from some form of construction in, for example, a greenhouse (1). Suspension is effected as a result of the fact that there is attached in said film tube (5) a carrier (8,18,28) extending in the longitudinal direction thereof. A perforation is formed through the film tube (5) for receiving therethrough a suspension member such as a hook (13). This hook (13) also engages with the carrier (8,18,28) in such a way as to allow longitudinal forces acting on the film tube (5) to be accommodated. A film tube (5) of this type can, for example, be suspended below cultivation drainpipes. The carrier (8,18,28) can comprise a belt consisting of two remote longitudinal strands and transverse strands extending therebetween, there being delimited between each two longitudinal strands and transverse strands an opening for the receiving therethrough of the hook (13).

## Description

The present invention relates to a film tube comprising a tubular film. A film tube of this type is used in greenhouses and other cultivation spaces for the displacement of air for optimising conditions in a greenhouse. Temperature control can thus be achieved, but cooling or heating is also possible. For this purpose, it is known simply to use tubes which are to be made of film and are connected to a fan, thus allowing large volumes of air to be circulated in a controlled manner.

In the prior art, film tubes of this type are suspended using hooks or other constructions. A hook is simply pierced through the film material or first a suitable opening is formed. In this way, simple fastening of the film tubes can be provided.

However, in practice it has been found that the fastening at these suspension points is deficient, as a result of which the service life of film tubes of this type is much shorter than the service life to be expected of the material.

NL 9202187A discloses a heating tube of which the upper end comprises a strengthening ridge from the foil material of the tube being provided with suspension openings. It is expensive to realise such a tube.

US 5,137,057 discloses a tube having external suspension openings in a ridge externally present on the tube and integral therewith.

US 3,357,088A discloses a tube being provided with spaced openings through which a support wire extends.

The object of the present invention is to avoid the drawbacks according to the prior art.

According to the invention, this is realised with a film tube comprising a tubular film provided with a carrier extending in the longitudinal direction of the tube, said carrier being provided with engagement means for accommodating the weight of said tube and longitudinal forces acting on said tube, said carrier being attached to the interior of said tube.

As a result of the presence of the preferably separate carrier inside the tube, not only is the weight of the film tube accommodated, but forces acting in the longitudinal direction of the film tube are also accommodated via the fastening of the carrier to some form of construction.

It has been found that the damage to the film tubes at the suspension points is caused not so much by the weight thereof but rather by the forces which arise during the switching-on and off of the fan and by turbulence in the tubular film. In particular during switching-on of the fan, a column of air is set in motion through the tube. A tube of this type, which can be 50 m or more in length, reflects this column at the end thereof, which will generally be tight. This gives rise to a force of impact providing a longitudinal force acting on the tubular film. The fact that the carrier is configured, in accordance with the present invention, so as to be able to accommodate longitudinal forces allows these forces to be introduced into the carrier distributed over the length thereof and thus to be accommodated, as a result of which the film tube no longer becomes damaged and a considerable service life of a large number of years can be obtained. A carrier being realised from the material of the tube itself such as known from the prior art wherein two extremities of a foil are welded together, will give insufficient strength to adsorb such forces and fail.

The accommodation of longitudinal forces requires that the carrier be in some way configured so as to allow the suspension member engaging therewith to absorb these transverse forces. It is thus possible to provide the carrier with eyelets. According to another variation, it is possible to configure the carrier as an open woven fabric or it is possible to provide the suspension member with a sufficiently sharp point to allow the carrier to be pierced easily. Obviously, it is possible to provide piercing using other means.

However, according to an advantageous embodiment of the invention, the carrier is configured in a particularly simple manner. The carrier consists of two remote longitudinal strands and transverse strands extending at a uniform distance therebetween. As a result, all openings are delimited and the respective suspension members can easily be inserted in these openings.

Longitudinal strands and transverse strands of this type can each consist of a number of filaments. As specified hereinbefore, the suspension member is preferably configured as a hook. The film tube brings the hook-shaped part into engagement with the carrier. This can be carried out at the site of the installation of the film tube so, depending on the conditions, a suspension for the film tube can rapidly be provided. The other end of the suspension member, such as a hook, can be configured as a function of the local conditions. According to one particular embodiment, the other end is also hook-shaped in its configuration. If, for example, the film tube is used in combination with a cultivation drainpipe system, the suspension members or hooks will preferably be fastened to the brackets which are present in order to suspend the cultivation drainpipes. In other constructions, such as in displaceable cultivation tables, it will be possible to use corresponding constructions.

The invention also relates to a cultivation system comprising a cultivation space with an air circulation system comprising a film tube and fan, wherein said film tube comprises a tubular film provided with a carrier extending in the longitudinal direction of said tube, which carrier is fastened to at least two points in said cultivation space. Securing the carrier at the ends thereof, for example to a cultivation drainpipe as in the above-mentioned example, provides a robust construction. As a result of the presence of the suspension members, the locally acting longitudinal force (and the weight) is accommodated at each suspension point between the fixed points of the carrier.

The carrier as described above which is preferably separate from the tube can easily be entered into the tube by blowing from one side thereof.

The film tube can discharge to the environment the air displaced therein in any manner known in the art. According to one particular embodiment of the invention, there is formed a hole pattern consisting of openings positioned at 180° relative to one another, the longitudinal axis of which extends substantially horizontally. Preferably, the film tubes are configured so as to be closed off in proximity to the ends thereof.

The invention will be described hereinafter in greater detail with reference to the illustrative embodiments depicted in the drawings, in which:
Fig. 1 shows schematically a cultivation system according to the invention;
Fig. 2 shows in detail the suspension of a film tube from a cultivation drainpipe; and
Fig. 3a - 3b show variations of a carrier.

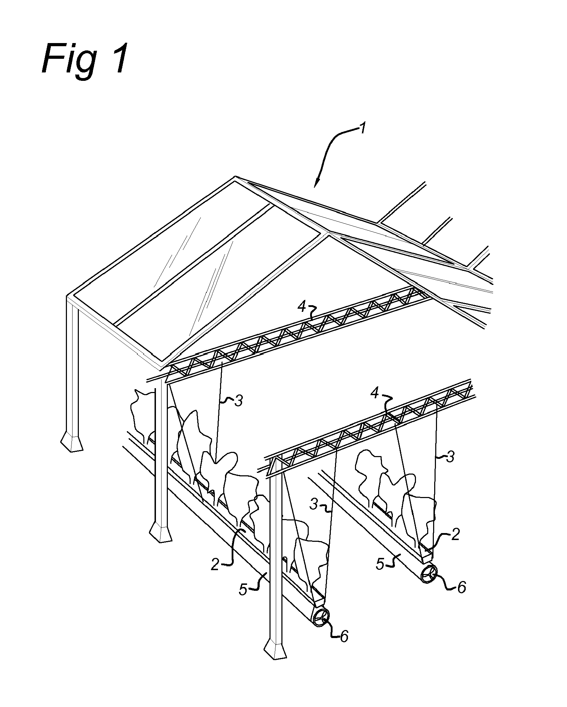

In Fig. 1, reference numeral 1 denotes a greenhouse in its entirety. Cultivation drainpipes are suspended therein from beams 4 via cables 3. Film tubes 5 are fastened to the cultivation drainpipes and the film tubes are provided with air via fans 6. The film tube/fan combinations can be attached in a cultivation space in any order. It is thus possible to connect the film tubes/fans one after another in order thus to achieve a zigzag air displacement pattern. Other possibilities also exist and are dependent on the local conditions and the requirements placed on the climate.

It will be understood that the present invention is also used in other cultivation systems wherein, for example, the crop is cultivated on tables or stands on the ground. In that case, the position of the film tube in relation to the crops can be altered. The fastening of the film tube can also be configured differently.

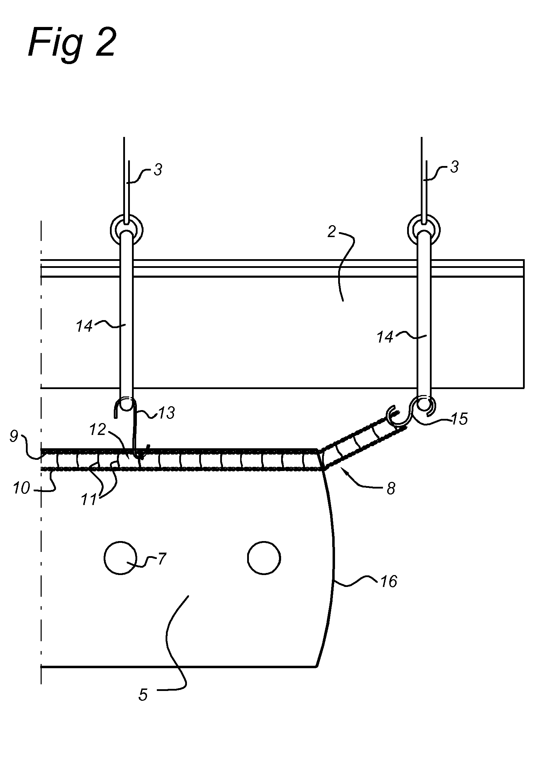

Fig. 2 shows a detail of the fastening of the film tube 5 to the cultivation drainpipes 2. As may be seen from Fig. 2, the cables 3 merge with brackets 14 supporting the cultivation drainpipes 2. Hooks 13 are attached to these brackets 14. The film tube 5 is provided with a carrier 8 attached therein. This carrier consists of two remote longitudinal strands 9 and 10 and transverse strands 11 extending at uniform distances therebetween, as a result of which openings 12 are delimited. The strands may or may not be configured so as to be interwoven as a monofilament or multifilament. The carrier can be fastened to the inner wall of the tube but it is also possible that the carrier is a separate item which is not connected to the tube in the starting position, i.e. before the provision of the hooks 3.

According to the present invention, the hook 3 extends through one (or two) openings 12 of this type. The carrier 15 extends beyond the end 16 of the film tube 5, where it can be fastened in some way to a construction in the greenhouse, in this case the cultivation drainpipe 2. An identical fastening is carried out in proximity to the inlet for the film tube in the ventilator 6. As a result, the carrier 8 is non-displaceable in the longitudinal direction.

Optionally, the distance between the transverse strands 11, i.e. the circumference of the opening 12, can be adapted to the thickness of the hook part of the hook 3 (or vice versa) in order thus to provide minimum free displacement.

The film tube 5 is provided with openings 7. The hole pattern thereof is preferably adapted in such a way that air at all times flows out uniformly over the entire length of the film tube. The end 16 of the film tube is tight.

With the foregoing construction, when the fan is started up a column of air will be displaced in the film tube and strike against the end 16. This causes a reactive force. These forces both exert a longitudinal force on the film tube. According to the present invention, this longitudinal force is accommodated by the carrier 8. After all, at each location where a hook 3 is inserted through the film tube, the film tube is fixed to the carrier 8 so as to be substantially non-displaceable in the longitudinal direction. As a result, longitudinal forces acting on the film tube are discharged via the carrier and hooks 3 and the fastening sites 15 in the cultivation drainpipe 2 or other construction.

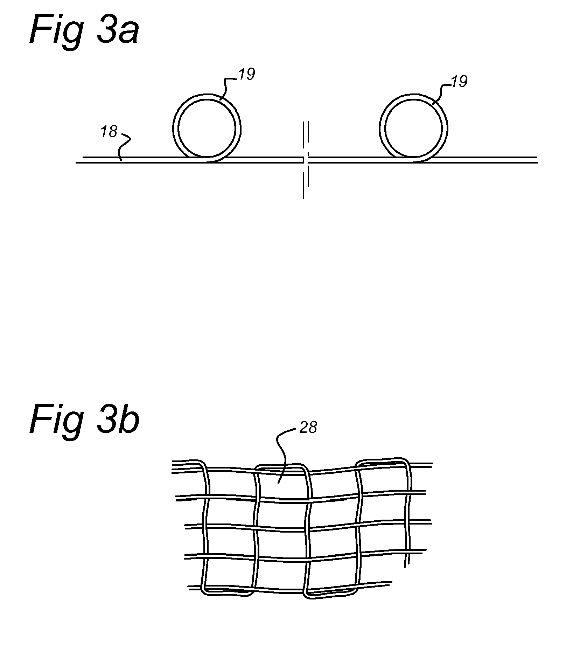

Fig. 3a and 3b show variations of the carrier. In the variation of Fig. 3a, the carrier is denoted in its entirety by reference numeral 18 and provided with eyelets 19 formed at a uniform distance. In this case, it is necessary that the position of an eyelet 19 correspond to the fastening position of a hook such as the hook 3 with, for example, a bracket 14.

The structure according to Fig. 3b has more freedom for positioning, there being shown a carrier 28 consisting of a comparatively open woven or knitted entity, allowing comparatively simple insertion of a hook 3, optionally after an opening has first been formed therein. Longitudinal forces can also be accommodated using this belt 28.

It has been found that with the above-described tubular film/carrier construction, the tubular film is rarely, if ever, torn.

The carrier can be attached in the tubular film in any manner conceivable in the prior art. The carrier can thus be present in the tubular film as soon as it is produced but it is also possible to attach it later.

On reading the foregoing, a person skilled in the art will immediately think of variations of the invention. These variations are within the scope of the claims.

## Claims

1. Film tube (5) comprising a tubular film provided with a carrier (8, 18, 28) extending in the longitudinal direction of the tube, said carrier being provided with engagement means (7, 19) for accommodating the weight of said tube and longitudinal forces acting on said tube, said carrier being provided in the interior of said tube.

2. Film tube according to Claim 1, wherein said engagement means comprise engagement members provided on to said carrier.

3. Film tube according to one of the preceding claims, wherein said engagement means comprise a woven structure of said carrier (28).

4. Film tube according to any one of the preceding claims, wherein said engagement means comprise two spaced spaced longitudinal carriers (9, 10) and transverse carriers (11) extending at a mutual distance between said longitudinal carriers.

5. Film tube according to Claim 4, wherein said longitudinal carriers comprise a number of filaments.

6. Film tube according to Claim 5, wherein said filaments are interwoven.

7. Film tube suspension member assembly, wherein said film tube (5) comprises a tubular film provided with a carrier (8, 18, 28) extending in the longitudinal direction of the tube in the interior thereof, said suspension member (13) and said carrier being configured for mutual engagement in such a way that forces acting in the longitudinal direction of said carrier are accommodated by said suspension member.

8. Assembly according to Claim 7, wherein said suspension member is hook-shaped and is provided with a free end which can be brought into engagement with said carrier.

9. Assembly according to Claim 7 or Claim 8, wherein said suspension member has an end to be connected to said carrier and an opposing end, said opposing end being hook-shaped.

10. Cultivation system comprising a cultivation space (1) with an air circulation system comprising a film tube (5) and fan (6), wherein said film tube comprises a tubular film provided with a carrier (8, 18, 28) extending in the longitudinal direction of said tube in the interior thereof, which carrier is fastened to at least two points in said cultivation space.

11. Cultivation system according to Claim 10, wherein said carrier is fastened between said two points (15) via suspension members (13) engaging with said carrier.

12. Cultivation system according to Claim 11, wherein said fastening is effected in such a way that the suspension member accommodates longitudinal forces acting in said carrier.
